Europäisches Patentamt

European Patent Office

Office européen des brevets

(19)

(11) **EP 0 981 881 B1**

(12) **FASCICULE DE BREVET EUROPEEN**

(45) Date de publication et mention
de la délivrance du brevet:
**20.03.2002 Bulletin 2002/12**

(21) Numéro de dépôt: **98924426.4**

(22) Date de dépôt: **13.05.1998**

(51) Int Cl.$^7$: **H04L 25/03**

(86) Numéro de dépôt international:
**PCT/FR98/00951**

(87) Numéro de publication internationale:
**WO 98/52329 (19.11.1998 Gazette 1998/46)**

(54) **DISPOSITIF D'EGALISATION ET DE DECODAGE POUR UN CANAL DE TRANSMISSION NUMERIQUE SELECTIF EN FREQUENCE**

ENTZERRUNGS- SOWIE DEKODIERUNGSEINRICHTUNG FÜR EINEN FREQUENZSELEKTIVEN KANAL ZUR DIGITALEN ÜBERTRAGUNG

EQUALISING AND DECODING DEVICE FOR A FREQUENCY-SELECTIVE DIGITAL TRANSMISSION CHANNEL

(84) Etats contractants désignés:
**DE FR GB IT**

(30) Priorité: **15.05.1997 FR 9705978**

(43) Date de publication de la demande:
**01.03.2000 Bulletin 2000/09**

(73) Titulaire: **FRANCE TELECOM
75015 Paris (FR)**

(72) Inventeurs:
• **GLAVIEUX, Alain**
**F-29280 Plouzane (FR)**
• **LABAT, Joel**
**F-29470 Plougastel Daoulas (FR)**
• **LAOT, Christophe**
**F-29217 Plougonvelin (FR)**

(74) Mandataire: **Texier, Christian et al
Cabinet Régimbeau
20, rue de Chazelles
75847 Paris cedex 17 (FR)**

(56) Documents cités:
**WO-A-96/24999**

• **BERROU C ET AL: "NEAR SHANNON LIMIT ERROR - CORRECTING CODING AND DECODING: TURBO-CODES (1)" PROCEEDINGS OF THE INTERNATIONAL CONFERENCE ON COMMUNICATIONS (ICC), GENEVA, MAY 23 - 26, 1993, vol. 1 - 2 - 03, 23 mai 1993, pages 1064-1070, XP000371240 INSTITUTE OF ELECTRICAL AND ELECTRONICS ENGINEERS**
• **DOUILLARD: "Iterative correction of intersymbol interference: Turbo-Equalization" EUROPEAN TRANSACTIONS ON TELECOMMUNICATIONS, vol. 6, no. 5, octobre 1995, pages 507-511, XP002055352 ITALY**
• **SEDAT OL ER: "SOFT-DECISION MULTISTAGE DECODING OF MULTILEVEL0CODED QUATERNARY PARTIAL-RESPONSE SIGNALS" PROCEEDINGS OF THE INTERNATIONAL SYMPOSIUM ON INFORMATION THEORY, TRONDHEIM, JUNE 27 - JULY 1, 1994,1 mai 1994, pages 1242-1248, XP000438699 INSTITUTE OF ELECTRICAL AND ELECTRONICS ENGINEERS**

EP 0 981 881 B1

**Description**

La présente invention est relative à un dispositif d'égalisation et de décodage pour un canal de transmission numérique sélectif en fréquence.

PRESENTATION DE L'ETAT DE LA TECHNIQUE

En transmission numérique, un récepteur peut être vu comme la mise en cascade de plusieurs fonctions élémentaires, chaque fonction réalisant un traitement spécifique tels que filtrage, démodulation, égalisation, décodage, etc...

Généralement, le traitement réalisé par une fonction élémentaire n'exploite qu'une partie de l'information mise à sa disposition et ainsi, les performances globales du récepteur sont sous optimales.

Un but de l'invention est de remédier à cet inconvénient.

Plusieurs auteurs ont déjà proposé de s'affranchir de l'interférence entre symboles introduite par un canal en utilisant différents types de récepteurs, construits à partir d'égaliseurs ou d'un détecteur selon le maximum de vraisemblance, appelé parfois, par abus de langage, égaliseur de Viterbi. Les contributions les plus significatives dans ce domaine sont celles de :

[1] A. Gersho, T.L. Lim, "Adaptive Cancellation of Intersymbol Interference for Data Transmission", The Bell System Technical Journal, Vol. 60, No. 11, pp. 1997-2021, November 1981.

[2] M.S. Mueller, J. Salz, "A Unified Theory of Data-Aided Equalization", The Bell System Technical Journal, Vol. 60, No. 9, pp. 2023-2038, November 1981.

Dans ces articles, les auteurs proposent un récepteur qui combine un filtre adapté et un annuleur d'interférences pour supprimer l'interférence entre symboles introduite par la sélectivité en fréquence d'un canal, sans remonter le niveau du bruit. L'annuleur d'interférences est alimenté par les symboles décodés (décisions fermes), produits préalablement par un récepteur constitué par un simple filtre transverse. La différence par rapport à l'invention réside dans le fait que d'une part, notre égaliseur est alimenté par des décisions pondérées élaborées par un décodeur de canal et d'autre part, que l'on utilise un processus itératif de traitement. Bien entendu, les récepteurs décrits dans [1] et [2] présentent des performances inférieures à l'invention proposée.

Egalement, il a été proposé dans :

(3)V.M. Eyuboglu, "Détection of Coded Modulation Signais on Linear, Severely Distorded Channels Using Decision-Feedback Noise Prediction with Interleaving", IEEE Transactions on Communications, Vol. 36, No. 4, pp. 401-409, April 1988, d'utiliser un égaliseur à décision dans la boucle et un décodeur de canal combiné avec un entrelaceur périodique. Avec cette approche, l'auteur montre que, sous certaines conditions, l'égaliseur peut exploiter les sorties du décodeur grâce à une gestion astucieuse des retards introduits par le décodeur. Bien entendu, les performances obtenues ne sont jamais meilleures que celles d'un égaliseur à décision dans la boucle piloté par les données émises. Le système décrit dans [3] présente des performances inférieures à l'invention proposée.

On pourra également se référer à

[4] K. Zhou, J.G. Proakis and F. Ling, "Decision-Feedback Equalization of Fading Dispersive Channels with Treillis-Coded Modulation", Int. Conf. Commun. Tech., Nanjing, China, November 1987.

[5] K. Zhou and J.G. Proakis, "Coded Reduced-Bandwith QAM with Decision-Feedback Equalization", Conf. Rec. IEEE Int. Conf. Commun., Philadelphia, Penn., pp. 12.6.1.-12.6.5, June 1988.

Ces deux contributions proposent une démarche analogue à celle suivie par V.M. Eyuboglu mais pour des canaux à évanouissements et pour un égaliseur à décision dans la boucle utilisant un critère de type RLS (Recursive Least-Squares Lattice). La vitesse de convergence de l'égaliseur est accrue par rapport à la référence [3] mais ses performances, en termes de taux d'erreurs sont inchangées.

Par ailleurs, il a été proposé dans :

[6] C. Douillard, A. Glavieux, M. Jézéquel et C. Berrou, "Dispositif de réception de signaux numériques à structure itérative, module et procédé correspondants", Brevet français n° FR 2730370 A FRANCE TELECOM, TDF, Février 1995,

d'associer un détecteur selon le maximum de vraisemblance (égaliseur de Viterbi) avec un décodeur de canal, au travers d'un processus itératif de traitement ce qui permet de gérer les différents retards introduits par le décodeur.

Toutefois, le dispositif présenté dans cette publication est réservé aux canaux ayant des réponses dont les durées sont de l'ordre de quelques symboles.

Le dispositif proposé par l'invention est quant à lui plus particulièrement adapté pour égaliser les canaux ayant une réponse temporelle s'étalant sur un grand nombre de symboles.

PRESENTATION DE L'INVENTION

L'invention concerne quant à elle un dispositif d'égalisation et de décodage comportant un module qui comprend un égalisateur et un décodeur à sortie pondérée, caractérisé en ce qu'il comporte plusieurs modules de ce type en série, dont les égaliseurs comportent chacun au moins un filtre transverse destiné notamment à réduire la puissance du bruit et qui, pour les modules de rang supérieur strictement à 1, reçoit une suite d'échantillons issue du canal et retardée d'une quantité égale au temps de traitement des modules précédents.

De préférence, l'égaliseur des modules de rang supérieur strictement à 1 comporte un autre filtre transverse qui est destiné à reconstruire l'interférence entre symboles présente en sortie du premier filtre et qui reçoit la sortie du module précédent, la sortie de l'égaliseur correspondant à la sortie du premier filtre à laquelle est retranchée l'interférence entre symboles reconstruite par ce deuxième filtre.

Avantageusement, pour les modules de rang supérieur strictement à 1, le filtre transverse qui reçoit la suite d'échantillons issue du canal est un filtre qui converge vers un filtre adapté.

Ainsi, le dispositif comporte plusieurs modules en cascade, chaque module comprenant un égaliseur et un décodeur à sortie pondérée.

L'égaliseur du module de rang 1 comporte un filtre transverse destiné à réduire la puissance du bruit et l'interférence entre symboles. Il reçoit une suite d'échantillons issues du démodulateur.

L'égaliseur des modules de rang supérieur strictement à 1 comporte dans une variante de réalisation préférée deux filtres transverses. Le premier, adapté au canal est destiné uniquement à réduire la puissance du bruit et le second, est destiné à reconstruire l'interférence entre symboles présente en sortie du filtre adapté. Le filtre adapté reçoit une suite d'échantillons issus du démodulateur retardée d'une quantité égale au temps de traitement des modules précédents, et le second filtre transverse est alimenté par la suite des valeurs moyennes des symboles calculée à partir de la sortie du décodeur de canal du module précédent. La sortie de l'égaliseur est égale à la sortie du filtre adapté à laquelle est retranchée l'interférence entre symboles reconstruite par le second filtre.

Ainsi, avec une telle structure itérative, l'égaliseur utilise conjointement les sorties du démodulateur et d'un décodeur de canal pour essayer de s'affranchir de l'interférence entre symboles introduite par la sélectivité du canal. Il tient compte à la fois des caractéristiques du canal de transmission et de la redondance introduite par la fonction de codage, pour réaliser son traitement.

Il est alors possible d'obtenir des performances analogues à celles d'un canal à bruit additif, blanc, gaussien, sans interférence entre symboles et avec codage.

En variante, l'égaliseur pourrait également être de type à décision dans la boucle.

PRESENTATION DES FIGURES

- la figure 1 illustre schématiquement le principe d'une chaîne de transmission ;
- la figure 2 illustre schématiquement le principe d'une structure itérative d'un dispositif d'égalisation de décodage conforme à un mode de réalisation possible de l'invention ;
- la figure 3 représente schématiquement la structure d'un module de la structure illustrée sur la figure 2 ;
- la figure 4 est un graphe sur lequel on a porté les zéros de la fonction de transfert du canal de Porat et Friedlander ;
- la figure 5 est un graphe qui donne le taux d'erreurs après décodage en fonction du rapport Eb/n0 et qui illustre des performances d'un dispositif du type de celui représenté sur les figures 2 et 3 pour une modulation MDP4 sur un canal de Porat et Friedlander;
- la figure 6 est un graphe sur lequel on a porté le taux d'erreur après décodage en fonction du rapport Eb/n0, qui illustre les performances d'un dispositif du type de celui représenté sur les figures 2 à 3 pour une modulation MAQ-16 sur un canal de Porat et Friedlander;
- les figures 7 et 8 donnent des représentations de constellations de signaux à l'entrée des filtres transverses des modules successifs d'un dispositif du type de celui des figures 2 et 3 pour des modulations respectivement de type HDP-4 et MAQ-16 et un rapport Eb/N0 respectivement égal à 4 dB et 7 dB ;
- la figure 9 est un graphe sur lequel on a porté les zéros de la fonction de transfert du canal de Proakis ;
- les figures 10 et 11 sont des graphes semblables à ceux des figures 5 et 6 illustrant les performances d'un dispositif conforme à l'invention sur un canal de Proakis pour respectivement une modulation MDP4 et une modulation MAQ-16.

## DESCRIPTION DETAILLEE D'UN MODE DE REALISATION

*La chaîne de transmission*

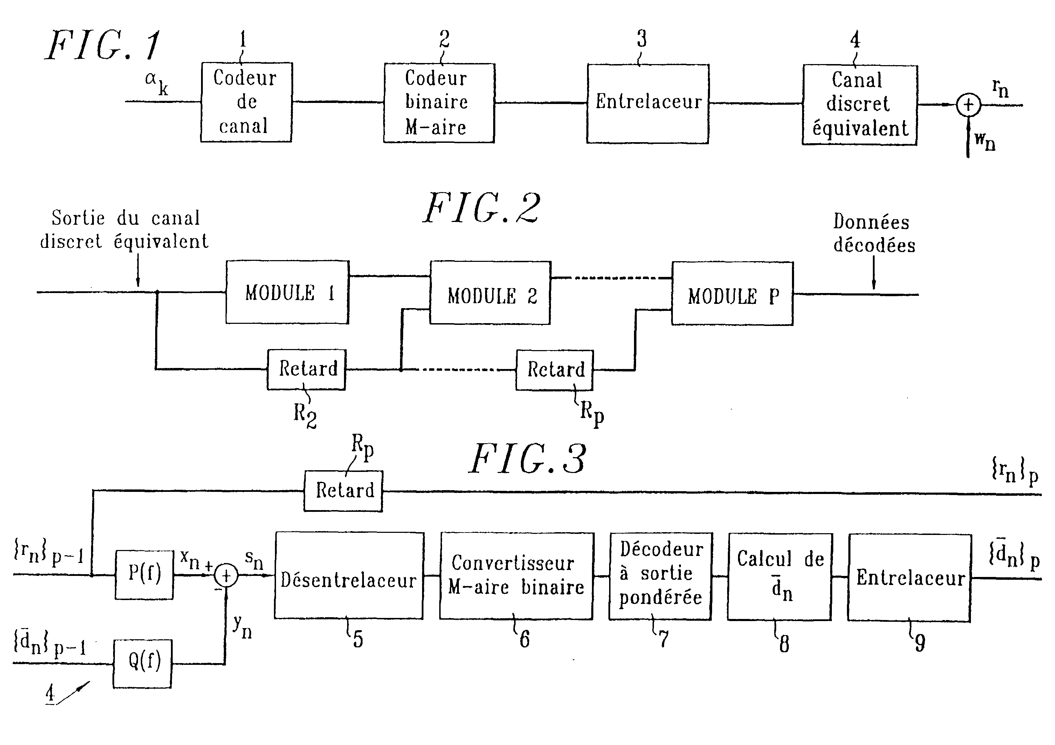

On a illustré sur la figure 1 le principe d'une chaîne de transmission de données binaires $\alpha_k$, émises par la source d'information à raison d'une donnée toutes les $T_b$ secondes.

Ces données $\alpha_K$, sont codées par un codeur de canal 1. A chaque ensemble de 2m données codées $C_{n,i}$ ; i = 1.... 2m, un codeur binaire M-aire 2 associe un symbole complexe $d_n = a_n + jb_n$ de variance $\sigma^2_d$ Les symboles $d_n$ sont entrelacés par un entrelaceur 3 puis émis à la cadence d'un symbole toutes les T secondes ($T = T_b \log_2 M$). Les symboles $a_n$ et $b_n$ prennent leur valeur dans l'ensemble $\{\pm 1, \pm 3... \pm(2i + 1)... \pm(\sqrt{M} - 1)\}$ avec $\sqrt{M} = 2^m$ et modulent en amplitude deux porteuses en quadrature (modulation MAQ-M).

L'ensemble modulateur, démodulateur, milieu de transmission, filtres d'émission et de réception est représenté sur la figure 1 par un canal discret équivalent 4, perturbé par un bruit additif $w_n$. La sortie $r_n$ du canal discret équivalent est de la forme :

$$r_n = \sum_{k=-L_1}^{L_2} \Gamma_k(n) d_{n-k} + w_n$$

où les $\Gamma_k(n)$ sont les coefficients, éventuellement complexes du canal discret équivalent, supposés normalisés, ces coefficients vérifiant par exemple l'hypothèse classique :

$$\sum_{k=-L_1}^{L_2} E\left\{\left|\Gamma_k(n)^2\right|\right\} = 1$$

Les quantité $w_n$ sont des échantillons de bruit blanc, centrés, gaussiens, indépendants des symboles $d_n$ et de variance $\sigma^2_W$.

Le canal discret équivalent, de fonction de transfert C(f) introduit donc une interférence entre symboles dont les parties causale et anti-causale portent respectivement sur $L_2$ et $L_1$ symboles.

$$C(f) = \sum_{k=-L_1}^{L_2} \Gamma_k(n) \exp - j2\pi fkT$$

*Structure générale du dispositif*

Dans le dispositif proposé, le traitement réalisé par l'égaliseur et le décodeur de canal est fait de manière itérative.

Un schéma de principe d'un dispositif en ce sens est représenté sur la figure 2. Le dispositif illustré sur cette figure correspond à P modules élémentaires où chaque module p ; p = 1... P correspond à une itération. Un module comprend plusieurs fonctions parmi lesquelles on trouve notamment un égaliseur et un décodeur de canal. L'entrée d'un module p tel que $1 < p \leq P$ est constituée d'une part par la suite des échantillons $\{r_n\}_{p-1}$ issue du canal discret équivalent et retardée par des lignes de retard $R_2, ..., R_p$ d'une quantité égale à $(p - 1)$ fois le temps de traitement d'un module (latence du module) et d'autre part, par la suite des valeurs moyennes $\{\bar{d}_n\}_{p-1}$ des symboles $d_n$ calculée à partir de la sortie du décodeur de canal appartenant au module (p-1). L'égaliseur appartenant à un module $1 < p \leq P$ peut donc bénéficier à la fois de la sortie du canal discret équivalent et de la redondance introduite par le codeur pour réaliser son traitement.

L'égaliseur appartenant au premier module (p = 1) ne dispose que des informations issues du canal discret équivalent pour réaliser son traitement.

*Structure d'un module élémentaire*

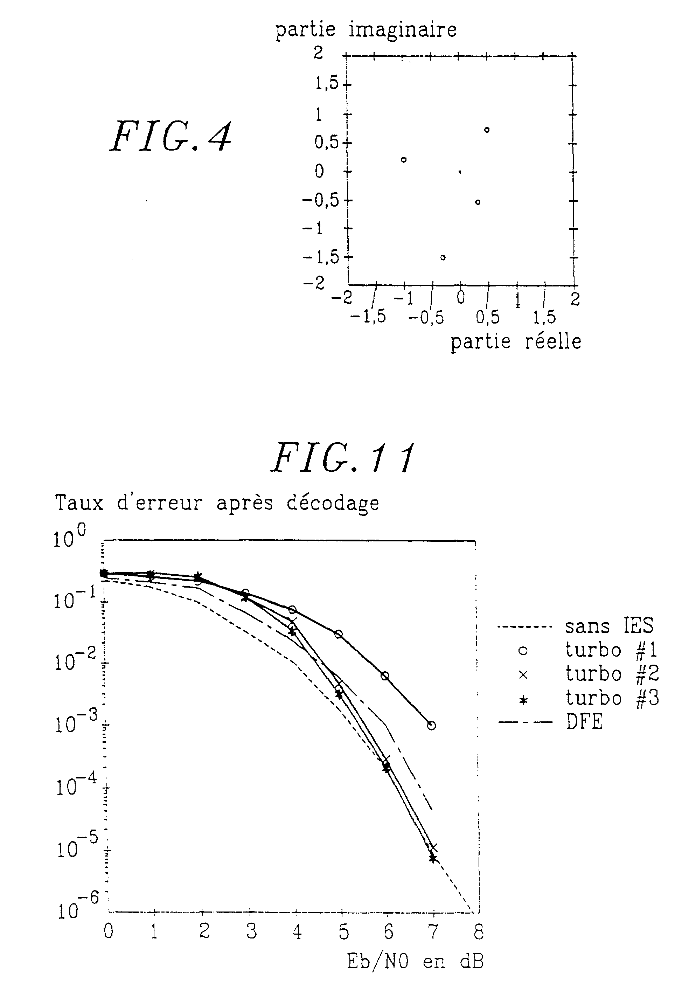

On a illustré sur la figure 3 la structure du piène module élémentaire lequel est constitué d'un égaliseur 4, d'un désentrelaceur 5, d'un convertisseur M-aire binaire 6, d'un décodeur de canal à sortie pondérée 7, d'une fonction permettant d'évaluer la valeur moyenne $\bar{d}_n$8 des symboles $d_n$ et d'un entrelaceur 9.

Structure de l'égaliseur

Dans l'exemple illustré sur la figure 3, l'égaliseur 4 est du type annuleur d'interférences.

Il est construit à partir de deux filtres transverses ayant respectivement pour réponse en fréquence P(f) et Q(f). Pour $1 < p \leq P$, l'entrée du filtre P(f) est constituée par la suite des échantillons $\{r_n\}_{p-1}$ et celle du filtre Q(f) par la suite des valeurs moyennes $\{\bar{d}_n\}_{p-1}$.

Le filtre P(f) qui converge, au fil des itérations vers un filtre adapté à 1a réponse C(f) du canal, possède $(L_1+L_2+1)$ coefficients et sert uniquement à réduire la puissance du bruit $w_n$. L'équation théorique de ce filtre adapté est

$$P(f) = \frac{\sigma_d^2}{\sigma_d^2 + \sigma_w^2} \sum_{k=-L_1}^{L_1} \Gamma_{-k}^* \exp - j2\pi fkT$$

où la notation * désigne le conjugué d'un coefficient.

Le filtre Q(f), dont le coefficient central est fixé à zéro ($q_0 = 0$) permet, au fil des itérations de reconstruire l'interférence entre symboles présente en sortie du filtre P(f) à partir des quantités $\{\bar{d}_n\}_{p-1}$. Il possède $(2L_1+2L_2+1)$ coefficients au maximum. L'équation théorique du filtre Q(f) optimal est donnée par :

$$Q(f) = \frac{\sigma_d^2}{\sigma_d^2 + \sigma_w^2} \sum_{k=-(L_1+L_2)}^{(L_1+L_2)} q_k \exp - j2\pi fkT$$

avec :

$$q_k = \sum_{j=-L_2}^{L_2} \Gamma_{j-k}^* \Gamma_j - \delta_{k,0}$$

La sortie $s_n$ de l'égaliseur est alors simplement obtenue en retranchant l'interférence $y_n$ entre symboles reconstruite par le filtre Q(f) à la sortie $x_n$ du filtre P(f).

L'égaliseur appartenant au premier module (p=1) est constitué d'un filtre unique de réponse P(f), non plus adapté à C(f), mais chargé à la fois de minimiser la puissance du bruit et l'interférence entre symboles présente en sortie du canal discret équivalent 4.

Calcul des coefficients des filtres de l'égaliseur

Les coefficients des filtres de l'égaliseur sont déterminés de manière adaptative, en utilisant un algorithme du gradient stochastique selon un critère du minimum de l'erreur quadrative entre la sortie $s_n$ de l'égaliseur et la donnée décodée $d_n$.

En appelant

$$P_n = \begin{bmatrix} p^n_{-L_2} \cdots & p^n_0 \cdots p^n_{L_2} \end{bmatrix}^t \quad \text{et} \quad Q_n = \begin{bmatrix} q^n_{-(L_1+L_2)} \cdots 0 \cdots q^n_{(L_1+L_2)} \end{bmatrix}^t$$

les vecteurs dont les composantes sont respectivement les coefficients des filtres P(f) et Q(f) à l'instant nT, on peut écrire :

$$P_{n+1} = P_n - \mu R^*_n (s_n - \hat{d}_n) \tag{1}$$

et :

$$Q_{n+1} = Q_n - \mu' \overline{D^*_n} (s_n - \hat{d}_n)$$

où

$$R_n = \begin{bmatrix} r_{n-L_1} \cdots r_n \cdots r_{n+L_1} \end{bmatrix}^t \quad \text{et} \quad \overline{D}_n = \begin{bmatrix} \overline{d}_{n-L_1-L_2} \cdots \overline{d}_n \cdots \overline{d}_{n+L_1+L_2} \end{bmatrix}^t$$

(où t désigne la fonction transposée), sont respectivement le vecteur d'observation et le vecteur des valeurs moyennes des symboles $d_n$ produit par le module (p-1) et utilisés par l'égaliseur à l'instant nT. $\mu$ et $\mu'$ sont deux coefficients de pas d'adaptation et $d_n = \hat{a}_n + j\hat{b}_n$ est le symbole décodé à partir des quantités $\overline{d}_n = \overline{a}_n + j\overline{b}_n$ produites par le module (p-1).

Bien entendu, d'autres méthodes pour l'estimation adaptative des coefficients des filtres sont envisageables, par exemple des méthodes d'estimation RLS.

Pour une modulation MAQ-M la règle de décodage des symboles $a_n$ et $b_n$ est la suivante :

$$\hat{a}_n = (M-1) \text{ si } \overline{a}_n > (M-2) \quad \hat{b}_n = (M-1) \text{ si } \overline{b}_n > (M-2)$$

$$\hat{a}_n = (2i+1) \text{ si } 2i < \overline{a}_n < 2i+2 \quad \hat{b}_n = (2i+1) \text{ si } 2i < \overline{b}_n < 2i+2 \tag{2}$$

$$\hat{a}_n = -(2i+1) \text{ si } -2i-2 < \overline{a}_n < -2i \quad \hat{b}_n = -(2i+1) \text{ si } -2i-2 < \overline{b}_n < -2i$$

$$\hat{a}_n = -(M-1) \text{ si } \overline{a}_n < -(M-2) \quad \hat{b}_n = -(M-1) \text{ si } \overline{b}_n < -(M-2)$$

Pour le premier module (p=1), seuls les coefficients du filtre P(f) sont à actualiser. Pour cela, on utilise encore la relation (1) mais $d_n$ est maintenant le symbole décodé à partir de la sortie $S_n = u_n + jv_n$ de l'égaliseur. La règle de décodage est encore donnée par la relation (2) en remplaçant $\overline{a}_n$ par $u_n$ et $\overline{b}_n$ par $v_n$.

L'entrelaceur et le désentrelaceur

L'entrelacement est réalisé au niveau des symboles $a_n$ et $b_n$ qui sont écrits ligne par ligne dans une matrice de dimension $N_1 = N$, $N_2 = N/\log 2\sqrt{M}$. Le paramètre N doit être égal à une puissance de 2 supérieure à $M = 2^P$.

Pour un couple (i,j) ; i étant fixé (i = 0,1, ... $(N_1-1)$) et j variant de 0 à $(N_2-1)$, les coordonnées $(i_1, J_1)$ du symbole émis sont :

$i_1 = 2 \text{ mod}_{N1/2}(X) + 1$
$j_1 = \text{mod}_{N2}(jy)$

où $\text{mod}_1$ signifie modulo 1.

avec :

$$x = \frac{2j+i}{2}$$

si i est pair

$$x = \frac{2j+i-1}{2}$$

si i est impair et :

| y = 7 | si z = 0 | y = 29 | si z = 4 |
|-------|----------|--------|----------|
| y = 17 | si z = 1 | y = 13 | si z = 5 |
| y = 11 | si z = 2 | y = 21 | si z = 6 |
| y = 23 | si z = 3 | y = 19 | si z = 7 |

où z est égal à x modulo 8.

Le désentrelaceur 9 étant la fonction duale de l'entrelaceur 3, sa mise en oeuvre se déduit directement de ce qui précède.

Un tel entrelacement symboles est particulièrement avantageux. Il permet notamment de s'affranchir du bruit au niveau de certaines métriques, les performances en sortie du décodeur étant alors meilleures que si l'on entrelace sur les données binaires. Egalement, l'entrelacement par symbole permet d'utiliser une modulation codée en treillis.

Le convertisseur M-aire binaire

La conversion M-aire permet d'utiliser un décodeur de canal dont la structure est indépendante du nombre d'états de la modulation MAQ-M.

Le convertisseur 6 M-aire binaire associe à chaque échantillon $s_n$ 2m échantillons représentatifs des 2m données binaires codées $C_{n,i}$ ; i = 1,2...2m.

Les 2m échantillons associés à chaque échantillon $s_n$ peuvent être obtenus en calculant le logarithme du rapport de vraisemblance (LRV) des données codées, à partir des échantillons $s_n$ en utilisant la relation suivante :

$$\Lambda(C_{n,i}) = K \log \frac{\Pr\{C_{n,i} = 1/s_n\}}{\Pr\{C_{n,i} = 0/s_n\}} \qquad i = 1, 2 \ldots 2m$$

où K est une constante.

Les expressions du LRV des données codées étant relativement complexes, il est possible de les approximer, pour un codage de gray et pour $K = \beta\sigma^2_w/2$ par les expressions suivantes :

$$\Lambda(C_{n,m}) = |u_n| - \beta 2^{m-1}$$

$$\Lambda(C_{n,i}) = |\Lambda(C_{n,i+1})| - \beta 2^{i-1}; \qquad i = (m-1) \ldots 2$$

$$\Lambda(C_{n,1}) = u_n$$

et :

$$\Lambda(C_{n,2m}) = |v_n| - \beta 2^{m-1}$$

$$\Lambda(C_{n,i+m}) = |\Lambda(C_{n,i+1+m})| - \beta 2^{i-1}; \qquad i = (m-1) \ldots 2$$

$$\Lambda(C_{n,m+1}) = v_n$$

où

$$\beta = \sigma_d^2/(\sigma_d^2 + \sigma_w^2).$$

Lorsque M = 4, c'est-à-dire pour une modulation de phase à quatre états (MAQ-4), les symboles $a_n$ et $b_n$ étant binaires, il n'y a pas à insérer de convertisseur M-aire binaire entre la sortie du désentrelaceur et l'entrée du décodeur.

Le décodeur de canal et le calcul des valeurs moyennes des symboles $d_n$

Après désentrelacement, les échantillons $\Lambda(C_{n,i})$ sont présentés à l'entrée d'un décodeur de canal à sortie pondéré, utilisant par exemple si le codage est de type convolutif un algorithme de Berrou-Adde tel que décrit dans

[7] C. Berrou, P. Adde, E. Angui and S. Faudeil, "A low complexity soft-output Viterbi décoder architecture", ICC'93, Geneva, Switzerland, May 1993. Ce décodeur produit une nouvelle valeur approchée $\bar{\Lambda}(c_{n,i})$ du logarithme du rapport de vraisemblance (LRV) des données codées.

$$\bar{\Lambda}(C_{n,i}) = \frac{1}{\lambda}\log \frac{\Pr\{C_{n,i} = 1/observation\}}{\Pr\{C_{n,i} = 0/observation\}} \tag{3}$$

où $1/\lambda$ est un coefficient.
La quantité $\bar{\Lambda}(C_{n,i})$ peut encore se mettre sous la forme :

$$\bar{\Lambda}(C_{n,i}) = k\Lambda(C_{n,i}) + W(C_{n,i}) \tag{4}$$

où k est une constante égale à 2 dans l'algorithme de Berrou-Adde et $W(C_{n,i})$ est l'information extrinsèque associée à la donnée
Pour alimenter le filtre Q(f) de l'égaliseur, les symboles $d_n$ étant inconnus, ils sont remplacés par leurs valeurs moyennes $\bar{d}_n = \bar{a}_n + j\bar{b}_n$ calculées à partir de $\bar{\Lambda}(C_{n,i})$ à la première itération et de l'information intrinsèque $W(c_{n,i})$ pour les itérations suivantes.
L'utilisation de $\bar{\Lambda}(c_{n,i})$, puis uniquement de $W(c_{n,i})$ pour calculer la valeur moyenne des données $d_n$ permet d'exploiter au mieux l'information issue du décodeur tout en respectant la règle fondamentale selon laquelle l'entrée du décodeur à un instant n ne doit pas dépendre de l'information extrinsèque $W(c_{n,i})$ qu'il a produit à l'itération précédente.

· Cas de la modulation MAQ-16

Pour la modulation MAQ-16, chaque symbole $d_n = a_n + jb_n$ est associé à quatre données codées ($C_{n,i}$ ; i = 1,2,3,4). En considérant un codage de gray, nous pouvons écrire :

$$\bar{a}_n = 3\Pr\{C_{n,1} = 1, C_{n,2} = 1\} + 1\Pr\{C_{n,1} = 1, C_{n,2} = 0\}$$

$$-1\Pr\{C_{n,1} = 0, C_{n,2} = 0\} + 3\Pr\{C_{n,1} = 0, C_{n,2} = 1\} \tag{5}$$

$$\bar{b}_n = 3\Pr\{C_{n,3} = 1, C_{n,4} = 1\} + 1\Pr\{C_{n,3} = 1, C_{n,4} = 0\}$$

$$-1\Pr\{C_{n,3} = 0, C_{n,4} = 0\} + 3\Pr\{C_{n,3} = 0, C_{n,4} = 1\} \tag{6}$$

En tenant compte que les données $C_{n,i}$ associées aux symboles $d_n$ sont mutuellement indépendantes dues à la présence de l'entrelaceur et, en utilisant les relations (3), (5) et (6), les valeurs moyennes des symboles $\bar{a}_n$ et $\bar{b}_n$ calculées à la première itération sont respectivement éqales à :

$$\overline{a}_n = \frac{3e^{\lambda\left[\bar{\Lambda}(c_{n,1}) + \bar{\Lambda}(c_{n,2})\right]} + e^{\lambda\bar{\Lambda}(c_{n,1})} - 1 - 3e^{\lambda\bar{\Lambda}(c_{n,2})}}{\left[1 + e^{\lambda\bar{\Lambda}(c_{n,1})}\right]\left[1 + e^{\lambda\bar{\Lambda}(c_{n,2})}\right]} \qquad (7)$$

et :

$$\overline{b}_n = \frac{3e^{\lambda\left[\bar{\Lambda}(c_{n,3}) + \bar{\Lambda}(c_{n,4})\right]} + e^{\lambda\bar{\Lambda}(c_{n,3})} - 1 - 3e^{\lambda\bar{\Lambda}(c_{n,4})}}{\left[1 + e^{\lambda\bar{\Lambda}(c_{n,3})}\right]\left[1 + e^{\lambda\bar{\Lambda}(c_{n,4})}\right]} \qquad (8)$$

Pour les itérations suivantes, les valeurs moyennes des symboles $\bar{a}_n$ et $\bar{b}_n$ sont toujours données par les relations (7) et (8) mais en remplaçant $\bar{\Lambda}(c_{n,i})$ par $W(c_{n,i})$.

· Cas de la modulation MAQ-4

Pour une modulation de phase à quatre états (MAQ-4), les expressions (5) et (6) se simplifient et deviennent :

$$\bar{a}_n = 1 Pr\{C_{n,1} = 1\} - 1 Pr\{C_{n,1} = 0\} \qquad (9)$$

$$\bar{b}_n = 1 Pr\{C_{n,2} = 1\} - 1 Pr\{C_{n,2} = 0\} \qquad (10)$$

et ainsi en utilisant les relations (3), (9) et (10), les valeurs moyennes des symboles $\bar{a}_n$ et $\bar{b}_n$ calculées à la première itération sont respectivement égales à :

$$\bar{a}_n = \frac{e^{\lambda\Lambda(c_{n,1})} - 1}{e^{\lambda\Lambda(c_{n,1})} + 1} \qquad (11)$$

$$\bar{b}_n = \frac{e^{\lambda\Lambda(c_{n,2})} - 1}{e^{\lambda\Lambda(c_{n,2})} + 1} \qquad (12)$$

Pour les itérations suivantes, les valeurs moyennes des symboles $a_n$ et $b_n$ sont toujours données par les relations (11) et (12) mais en remplaçant, comme précédemment $\bar{\Lambda}(c_{n,i})$ par $W(c_{n,i})$.

## PERFORMANCES D'UN DISPOSITIF DU TYPE DE CELUI QUI VIENT D'ETRE DECRIT

Pour évaluer les performances du dispositif, deux modèles pour le canal discret équivalent ont été utilisés, un premier proposé par Porat et Friedlander à coefficients complexes et un second à coefficients réels, proposé par Proakis. Ces canaux possèdent des fonctions de transfert dont les zéros sont plus ou moins proches du cercle unité, c'est-à-dire plus ou moins faciles à égaliser.

### *Cas du canal de Porat et Friedlander*

Les coefficients $\Gamma_k$ du canal de Porat et Friedlander, au nombre de cinq sont constants et complexes pour quatre d'entre eux. La position des zéros sur le cercle unité de la fonction de transfert de ce canal est représenté sur la figure 4.

[2-0,4J ; 1,5+1,8j ; 1,2-1,3j ; 0,8+1,6j]

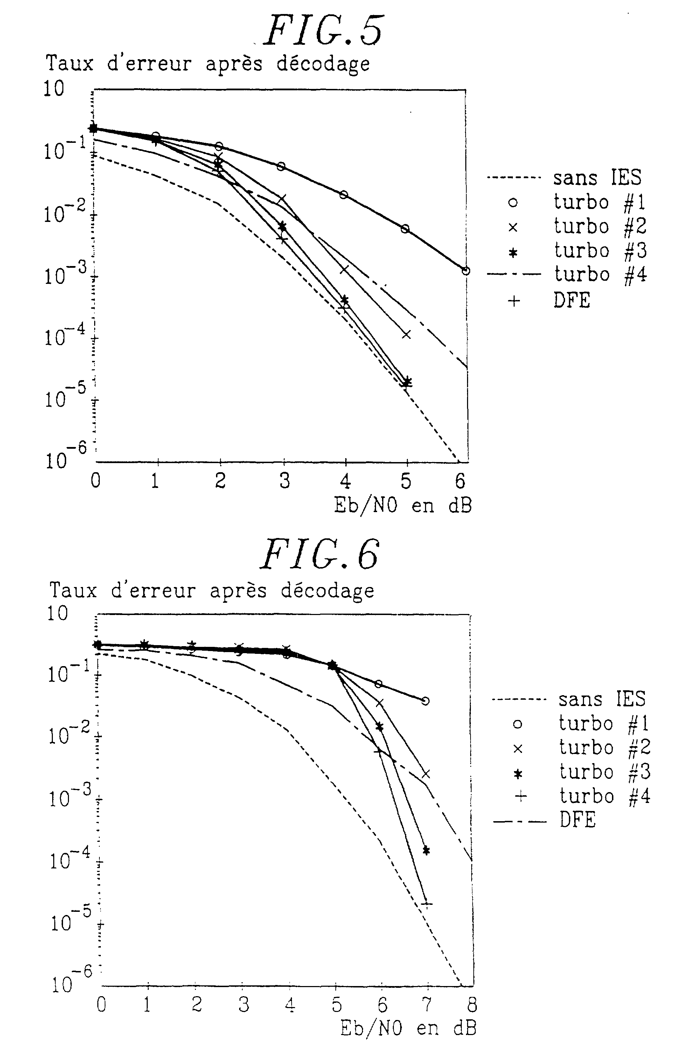

On a porté sur les figures 5 et 6, le taux d'erreurs binaires (Teb) en fonction du rapport $E_b/N_0$ en sortie du turbo-égaliseur pour un canal de Porat et Friedlander, respectivement pour une modulation de phase à quatre états (MDP-4) et une modulation d'amplitude suivant deux porteuses en quadrature à 16 états (MAQ-16). Sur ce canal réputé assez difficile à égaliser, les performances du dispositif proposé par l'invention, après quatre itérations, se confondent avec celles d'un canal sans interférence entre symboles et avec codage, dès lors que le rapport signal à bruit est supérieur à 4 dB pour la modulation MDP-4 et 7 dB pour la modulation MAQ-16.

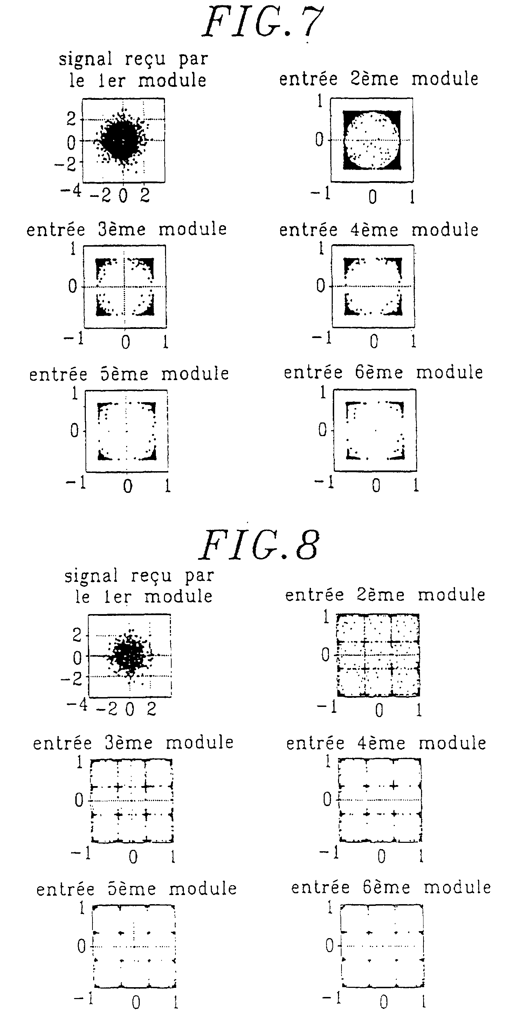

Sur la figure 7, on a représenté d'une part la constellation du signal reçu pour un rapport $E_b/N_0$=4dB et d'autre part, les constellations des signaux (valeur moyenne des symboles $d_n$) placés à l'entrée du filtre $Q(f)$ pour les itérations 1 à 5. On peut remarquer que dès la troisième itération, ces signaux possèdent une constellation très voisine de celle d'une modulation MDP-4. Ainsi, pour un rapport signal à bruit supérieur ou égal à 4 dB, le filtre $Q(f)$ est en mesure de reconstruire l'interférence entre symboles présente en sortie du filtre $\bar{P}(f)$.

On a représenté sur la figure 8 la constellation du signal reçu ainsi que les constellations des signaux (valeur moyenne des symboles $d_n$) placés à l'entrée du filtre $Q(f)$ pour les itérations 1 à 5 et un rapport $E_b/N_0$=7dB. A partir de la quatrième itération ces signaux possèdent une constellation très voisine de celle d'une modulation MAQ-16. Ainsi, dès lors que le rapport signal à bruit est supérieur ou égal à 7 dB, la sortie de l'égaliseur est susceptible d'être sans interférence entre symboles.

Par conséquent, le dispositif selon l'invention permet de s'affranchir totalement de la sélectivité en fréquence de ce canal sans toutefois remonter le niveau du bruit, ce que ne parvient pas à faire un égaliseur à décision dans la boucle (DFE) piloté en permanence par les vraies données. Pour un Teb de $10^{-5}$, le gain par rapport à un égaliseur de type DFE est de l'ordre de 1,5 dB pour une modulation MDP-4 et de 2 dB pour une modulation MAQ-16.

Cas d'un canal proposé par Proakis

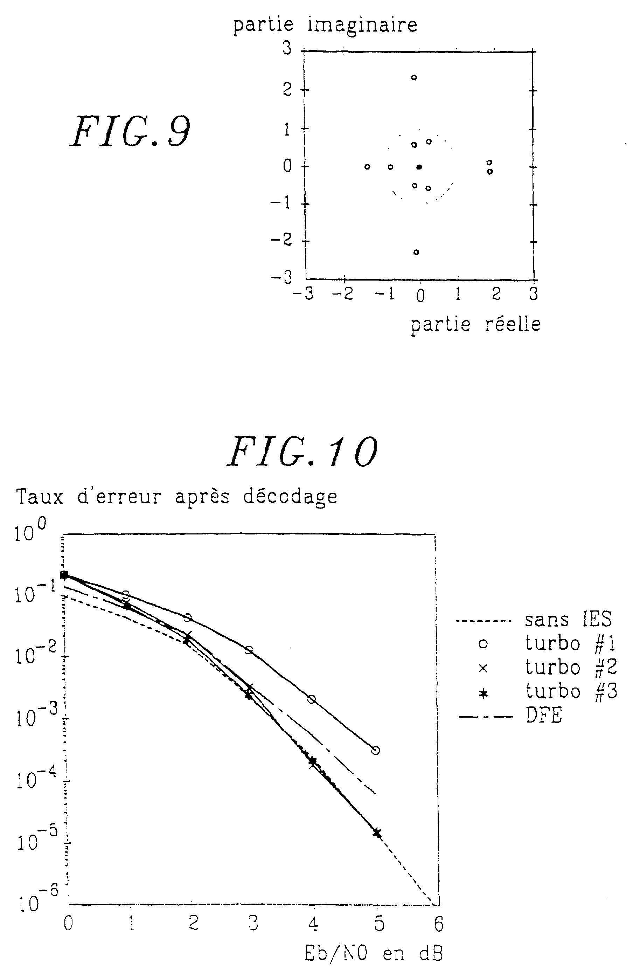

Les coefficients $\Gamma_k$ du canal proposé par Proakis au nombre de onze sont réels et constants. La position des zéros sur le cercle unité de la fonction de transfert de ce canal est représentée sur la figure 9.

[0,04 ; -0,05 ; 0,07 ; -0,21 ; -0,5 ; 0,72 ; 0,36 ; 0 ; 0,21 ; 0,03 ; 0,07]

Sur les figures 10 et 11, il a été représenté le taux d'erreurs binaires (Teb) en fonction du rapport $E_b/N_0$ en sortie du turbo-égaliseur, pour un canal proposé par Proakis respectivement pour une modulation de phase à quatre états (MDP-4) et une modulation d'amplitude suivant deux porteuses en quadrature à 16 états (MAQ-16). Pour ce canal, deux itérations suffisent pour que les performances du turbo-égaliseur se confondent avec celles d'un canal sans interférence entre symboles et avec codage, dès lors que le rapport signal à bruit est supérieur ou égal à 2 dB pour une modulation MDP-4 et 6 dB pour une modulation MAQ-16. On notera que le turbo-égaliseur conduit toujours à de meilleures performances que l'égaliseur à décision dans la boucle pilotée par les vraies données, même si le gain n'est plus que de 0,5 dB, pour un taux d'erreurs de $10^{-5}$.

APPLICATIONS

Le dispositif qui vient d'être décrit trouve avantageusement application pour des canaux possédant des réponses impulsionnelles s'étalant sur quelques dizaines de durées symboles. En effet pour ces canaux, il n'est pas envisageable d'utiliser un récepteur optimisé suivant le critère du maximum de vraisemblance.

Notamment, l'invention trouvera avantageusement application pour les transmissions sur canal radiomobile, sur canal câble ou encore sur canal acoustique sous-marin.

Elle est applicable à tout système de transmission utilisant des modulations linéaires telles que modulations de phase à deux ou quatre états (MDP-2, MDP-4 ou MAQ-4), modulations d'amplitude suivant une ou deux porteuses en quadrature (MAQ-M).

Le système de codage peut être de type convolutif ou en blocs et le décodeur doit être à sortie pondérée c'est-à-dire capable d'associer à chaque symbole décodé une information de fiabilité.

**Revendications**

**1.** Dispositif d'égalisation et de décodage comportant en série plusieurs modules (Module 1, ..., Module P) à égaliseur (4) et décodeur à sortie pondérée (7), les modules de rang supérieur strictement à 1 recevant une suite d'échantillons issue du canal et retardée d'une quantité égale au temps de traitement des modules précédents, **caractérisé en ce que** les égaliseurs (4) comportent chacun un filtre transverse (P(f)) qui est un filtre adapté pour recevoir la suite d'échantillons retardée et qui est apte à réduire la puissance du bruit, et **en ce que** les égaliseurs des modules de rang supérieur strictement à 1 comportent chacun un deuxième filtre transverse (Q(f)) qui est adapté à recevoir la suite de valeurs moyennes de symboles en sortie du module précédent et qui est apte à reconstruire l'interférence entre symboles présente en sortie du premier filtre (P(f)) la sortie de ces égaliseurs correspondant à la sortie de leur premier filtre (P(f)) à laquelle est retranchée l'interférence entre symboles reconstruite par leur deuxième filtre (Q(f)).

**2.** Dispositif selon la revendication 1, **caractérisé en ce que**, pour les modules de rang supérieur strictement à 1, le filtre transverse qui reçoit la suite d'échantillons issue du canal est un filtre qui converge vers un filtre adapté.

**3.** Dispositif selon l'une des revendications précédentes, **caractérisé en ce qu'**un module comporte un convertisseur M-aire binaire (6).

**4.** Dispositif selon l'une des revendications précédentes, **caractérisé en ce qu'**un module comporte un entrelaceur (9) aval de son décodeur à sortie pondérée (7), ainsi qu'un désentrelaceur (5) entre son égaliseur (4) et le décodeur à sortie pondérée (7).

**5.** Dispositif selon les revendications 3 et 4, prises en combinaison, **caractérisé en ce qu'**un module comporte, en amont de l'entrelaceure (9) et en aval du décodeur de canal à sortie pondérée (7), des moyens de calcul de la valeur moyenne de symboles.

**6.** Dispositif selon l'une des revendications précédentes, **caractérisé en ce que** les coefficients du ou des filtres d'un égaliseur sont déterminés de manière adaptative par un algorithme du gradient stockastique selon un critère de minimum de l'erreur quadratique entre la sortie de l'égaliseur et la donnée décodée en sortie du module.


**Patentansprüche**

**1.** Vorrichtung zur Entzerrung und Decodierung, umfassend in Serie mehrere Module (Modul 1,...,Modul P) zur Entzerrung (4) und Decodierung mit gewichtetem Ausgang (7), wobei die Module mit Rang streng größer als 1 eine Folge von Signalen empfangen, die vom Kanal ausgegeben und um einen Betrag verzögert wird, welcher der Verarbeitungszeit der vorausgehenden Module entspricht, **dadurch gekennzeichnet, daß** die Entzerrer (4) jeweils ein Transversalfilter (P(f)) aufweisen, welches ein Filter ist, das zum Empfangen der verzögerten Folge von Signalen eingerichtet ist und zum Verringern der Rauschleistung geeignet ist, und dadurch, daß die Entzerrer der Module mit Rang streng größer als 1 jeweils ein zweites Transversalfilter (Q(f)) aufweisen, welches zum Empfangen der Folge von Mittelwerten von Symbolen am Ausgang des vorhergehenden Moduls eingerichtet ist und welches geeignet ist, die Interferenz zwischen am Ausgang des ersten Filcers (P(f)) vorliegenden Symbolen zu rekonstruieren, wobei der Ausgang dieser Entzerrer dem Ausgang von deren ersten Filter (P(f)) entspricht, bei welchem die Interferenz zwischen durch deren zweites Filter (Q(f)) rekonstruierten Symbolen entfernt ist.

**2.** Vorrichtung nach Anspruch 1, **dadurch gekennzeichnet, daß**, für die Module mit Rang streng größer als 1 das Transversalfilter, welches die Folge von von dem Kanal gelieferten Signalen empfängt, ein Filter ist, welches gegen ein angepaßtes Filter konvergiert.

**3.** Vorrichtung nach einem der vorausgehenden Ansprüche, **dadurch gekennzeichnet, daß** ein Modul einen M-wertigen binären Modulator (6) aufweist.

**4.** Vorrichtung nach einem der vorhergehenden Ansprüche, **dadurch gekennzeichnet, daß** ein Modul einen Interleaver (9) nach dessen Decodierer mit gewichtetem Ausgang (7) aufweist, sowie einen Deinterleaver (5) zwischen dessen Entzerrer (4) und dem Decodierer mit gewichtetem Ausgang (7).

**5.** Vorrichtung nach Ansprüchen 3 und 4, in Kombination genommen, **dadurch gekennzeichnet, daß** das Modul vor dem Interleaver (9) und nach dem Kanaldecodierer mit gewichtetem Ausgang (7) Mittel zur Berechnung des Mittelwerts der Symbole (8) aufweist.

**6.** Vorrichtung nach einem der vorausgehenden Ansprüche, **dadurch gekennzeichnet, daß** die Koeffizienten des oder der Filter eines Entzerrers in einer adaptiven Weise durch einen Algorithmus des stochastischen Gradienten gemäß einem Kriterium des kleinsten quadratischen Fehlers zwischen dem Ausgang des Entzerrers und den decodierten Daten am Ausgang des Moduls bestimmt sind.

**Claims**

1. Equalizing and decoding apparatus including in series a plurality of equalizer (4) and weighted output decoder (7) modules (Module 1, ..., Module P), each module of rank greater than 1 receiving a stream of channel samples that has been delayed by a quantity equal to the processing time of the preceding modules, the apparatus being **characterized in that** each equalizer (4) has one transversal filter (P(f)) which is a filter adapted to receive the stream of delayed samples and which is capable of reducing noise power, and **in that** in each module of rank greater than 1, each equalizer includes a second transversal filter (Q(f)) which is adapted to receive the stream of symbol mean values at the output from the preceding module and which is capable of reconstructing the intersymbol interference present at the output of the first filter (P(f)), the outputs of said equalizers corresponding to the outputs of their first filters (P(f)) minus the intersymbol interference as reconstructed by their second filters (Q(f)).

2. Apparatus according to claim 1, **characterized in that**, for modules of rank greater than 1, the transversal filter which receives the stream of channel samples is a filter which converges towards an adapted filter.

3. Apparatus according to any preceding claim, **characterized in that** a module includes an M-ary to binary converter (6).

4. Apparatus according to any preceding claim, **characterized in that** a module includes an interleaver (9) downstream from its weighted output decoder (7), and a deinterleaver (5) between its equalizer (4) and the weighted output decoder (7).

5. Apparatus according to claims 3 and 4 in combination, **characterized in that** a module includes, upstream from the interleaver (9) and downstream from the weighted output channel decoder (7), means for calculating the mean values of the symbols (8).

6. Apparatus according to any preceding claim, **characterized in that** the coefficients of the filter(s) of an equalizer are determined in adaptive manner by a stochastic gradient algorithm using a least squares error criterion between the output of the equalizer and the decoded data output from the module.

EP 0 981 881 B1

*FIG.1*

$\alpha_k$ | Codeur de canal (1) | Codeur binaire M-aire (2) | Entrelaceur (3) | Canal discret équivalent (4) | $r_n$

$w_n$

*FIG.2*

Sortie du canal discret équivalent

MODULE 1 | MODULE 2 ----- MODULE P | Données décodées

Retard $R_2$ ............ Retard $R_p$

*FIG.3*

$R_p$ Retard | $\{r_n\}_p$

$\{r_n\}_{p-1}$ | P(f) | $x_n$ + | $s_n$ | Désentrelaceur (5) | Convertisseur M-aire binaire (6) | Décodeur à sortie pondérée (7) | Calcul de $\bar{d}_n$ (8) | Entrelaceur (9) | $\{\bar{d}_n\}_p$

$\{\bar{d}_n\}_{p-1}$ | Q(f) | $y_n$

4

partie imaginaire

*FIG.4*

*FIG.11*

Taux d'erreur après décodage

------- sans IES
○ turbo #1
× turbo #2
* turbo #3
—·— DFE

Eb/N0 en dB

## FIG.5

Taux d'erreur après décodage

Eb/N0 en dB

------- sans IES
o   turbo #1
×   turbo #2
*   turbo #3
—·—  turbo #4
+   DFE

## FIG.6

Taux d'erreur après décodage

Eb/N0 en dB

------- sans IES
o   turbo #1
×   turbo #2
*   turbo #3
+   turbo #4
—·—  DFE

# FIG.7

signal reçu par
le 1er module

entrée 2ème module

entrée 3ème module

entrée 4ème module

entrée 5ème module

entrée 6ème module

# FIG.8

signal reçu par
le 1er module

entrée 2ème module

entrée 3ème module

entrée 4ème module

entrée 5ème module

entrée 6ème module

partie imaginaire

*FIG.9*

partie réelle

*FIG.10*

Taux d'erreur après décodage

----------- sans IES
o        turbo #1
×        turbo #2
*        turbo #3
—·—    DFE

Eb/N0 en dB